# EUROPEAN PATENT SPECIFICATION

(11) **EP 3 534 241 B1**
(45) Date of publication and mention of the grant of the patent: **22.09.2021**
(21) Application number: 18159588.5
(22) Date of filing: 01.03.2018
(51) Int. Cl.: G06F 3/01, G06T 19/00, G02B 27/01, G02B 27/00

(54) **METHOD, APPARATUS, SYSTEMS, COMPUTER PROGRAMS FOR ENABLING MEDIATED REALITY**
VERFAHREN, VORRICHTUNG, SYSTEME, COMPUTERPROGRAMME ZUR ERMÖGLICHUNG VON VERMITTELTER REALITÄT
PROCÉDÉ, APPAREILS, SYSTÈMES, PROGRAMMES INFORMATIQUES PERMETTANT LA RÉALITÉ INDUITE

(43) Date of publication of application: 04.09.2019
(73) Proprietor: Nokia Technologies Oy, 02610 Espoo (FI)
(72) Inventor: JOKELA, Tero, 33820 Tampere (FI); SAARINEN, Jukka, 37120 Nokia (FI)
(74) Representative: Swindell & Pearson Limited

(56) References cited:
- GB-A- 2 546 983
- US-A1- 2011 004 327

## Description

### TECHNOLOGICAL FIELD

Embodiments of the present invention relate to methods, apparatus, systems, computer programs for enabling mediated reality.

### BACKGROUND

Mediated reality allows a user to visually experience a fully or partially artificial environment (a virtual space) as a virtual scene at least partially rendered by an apparatus to a user. The apparatus comprises a head-mounted viewing device which is worn by the user. The virtual scene is determined by a point of view of a user within the virtual space. The point of view of the user depends upon a virtual location of the user and a virtual orientation of the user.

First-person perspective mediation means that user's real point of view within a real space determines the point of view of the user within the virtual space, changing the virtual scene. The virtual orientation of the user depends on the real orientation of the user. A variation in the user's real orientation determines a variation in the virtual orientation of the user within the virtual space.

In some but not necessarily all examples, the virtual location of the user depends on the real location of the user. A variation in the user's real location determines a variation in the virtual location of the user within the virtual space.

If a user is experiencing a fully or partially artificial environment when wearing a head-mounted viewing device, it might be necessary for the user to remove the head-mounted viewing device every time the user wishes to see (aspects of) the real world. This may be inconvenient for the user.

If the user is experiencing a partially artificial environment when wearing a head-mounted viewing device, it might be difficult for a user to tell which objects form part of the artificial environment and which objects form part of the real environment, creating confusion for the user.

GB2546983 (A) discloses an entertainment system for providing virtual reality content comprising a microphone operable to capture a sound input, a head-mountable display (HMD) device operable to display a virtual environment and an entertainment device. An audio input analysis unit characterises sound captured by the microphone, and an interaction determination unit determines an interaction with the virtual environment in dependence upon the results of the audio input analysis and the relative positions of the user and a virtual object in the virtual environment. A content generation unit then generates content to modify the virtual environment, the content corresponding to the determined interaction. The captured sound may be a non-verbal input by a user. The sound may be characterised based upon at least one of volume, perceived pitch, frequency content and duration.

US2011004327 (A1) discloses certain aspects of a method and system for controlling a user interface of a device using human breath. This includes a device comprising an embedded micro-electro-mechanical system (MEMS) sensing and processing module. The MEMS sensing and processing module may detect movement caused by expulsion of human breath by a user. In response to the detection of movement caused by expulsion of human breath, one or more control signals may be generated. The generated control signals may control the user interface of the device and may enable navigation and/or selection of components in the user interface.

### BRIEF SUMMARY

The invention is defined by the appended independent claims. Further embodiments of the invention are specified by the appended dependent claims.

According to various, but not necessarily all, examples of the disclosure there is provided an apparatus, comprising: at least one processor; and memory storing computer program instructions configured, working with the at least one processor, to at least: cause display of mediated reality content on at least one display of a head-mounted viewing device; detect, while the mediated reality content is displayed by the at least one display of the head-mounted viewing device, one or more changes in air pressure caused by a user exhaling and/or inhaling without speaking; and altering display of mediated reality content by the at least one display of the head-mounted viewing device based, at least in part, on the one or more changes in air pressure.

Altering display of mediated reality content may comprise altering an appearance of at least one virtual object. An extent to which display of mediated reality content is altered may depend on a magnitude of the detected one or more changes in air pressure.

Altering display of the mediated reality content may comprise removing at least a portion of a displayed virtual visual scene. Removal of at least a portion of a displayed virtual visual scene may reveal at least a portion of a real visual scene.

The user's field of view of real space, as provided by the at least a portion of the real visual scene, may depend on a magnitude and/or a duration of the detected one or more changes in air pressure.

A size of the portion of the real visual scene may depend on a magnitude and/or a duration of the detected one or more changes in air pressure.

A location at which the portion of the real visual scene is revealed may depend upon an orientation of the user's head and/or a direction of the user's gaze while the one or more changes in pressure are detected which are caused by the user exhaling and/or inhaling without speaking.

The computer program instructions may be configured, working with the at least one processor, to: respond to user input provided by the user by replacing the at least a portion of the real visual scene with at least a portion of the virtual visual scene.

The mediated reality content may be augmented reality content in which at least a portion of a real visual scene is shown simultaneously with at least a portion of a virtual visual scene. Altering display of mediated reality content may comprise altering an appearance of at least one virtual object displayed by the at least one display. Altering the appearance of the at least one virtual object may distinguish the at least one virtual object from at least one real object in the real visual scene.

Altering the appearance of the at least one virtual object may comprise highlighting the at least one virtual object by: moving the at least one virtual object, causing the at least one virtual object to blink, displaying a border around the at least one virtual object, or altering one or more of: a size, color, brightness, translucency or focus of the virtual object.

The at least one virtual object may be selected for alteration based, at least in part, on an orientation of the user's head and/or a direction of the user's gaze.

The apparatus may be the head-mounted viewing device which comprises the at least one display.

According to various, but not necessarily all, examples of the disclosure there is provided a method, comprising: causing display of mediated reality content on at least one display of a head-mounted viewing device; detecting, while the mediated reality content is displayed by the at least one display of the head-mounted viewing device, one or more changes in air pressure caused by a user exhaling and/or inhaling without speaking; and altering display of mediated reality content by the at least one display of the head-mounted viewing device based, at least in part, on the one or more changes in air pressure.

According to various, but not necessarily all, examples of the disclosure there is provided computer program instructions that, when executed by at least one processor, cause the at least one processor to perform: causing display of mediated reality content on at least one display of a head-mounted viewing device; detecting, while the mediated reality content is displayed by the at least one display of the head-mounted viewing device, one or more changes in air pressure caused by a user exhaling and/or inhaling without speaking; and altering display of mediated reality content by the at least one display of the head-mounted viewing device based, at least in part, on the one or more changes in air pressure.

A computer program may comprise the computer program instructions. The computer program instructions may be stored on one or more non-transitory computer readable media.

According to various, but not necessarily all, examples of the disclosure there is provided an apparatus, comprising: means for causing display of mediated reality content on at least one display of a head-mounted viewing device; means for detecting, while the mediated reality content is displayed by the at least one display of the head-mounted viewing device, one or more changes in air pressure caused by a user exhaling and/or inhaling without speaking; and means for altering display of mediated reality content by the at least one display of the head-mounted viewing device based, at least in part, on the one or more changes in air pressure.

The means for causing display, the means for detecting and the means for altering might be provided by memory storing computer program instructions and at least one processor for executing the computer program instructions.

### BRIEF DESCRIPTION OF FIGURES

For a better understanding of various examples that are useful for understanding the detailed description, reference will now be made by way of example only to the accompanying drawings in which:
Figures 1A-1C and 2A-2C illustrate examples of mediated reality in which figures 1A, 1B, 1C illustrate, from a common top perspective, the same virtual visual space and different points of view and figures 2A, 2B, 2C illustrate a virtual visual scene from the perspective of the respective points of view;
fig. 3A illustrates an example of a real space and Fig 3B illustrates an example of a real visual scene;
fig. 4 illustrates, from a top perspective, an example of a sound space 90 that corresponds to the virtual visual space;
fig. 5A illustrates an example of an apparatus that may, for example, be a chip or a chipset;
fig. 5B illustrates a further apparatus which may, for example, be or comprise a head-mounted viewing device that is operable to enable mediated reality and/or augmented reality and/or virtual reality;
fig. 5C illustrates an example of the head-mounted viewing device;
fig. 6A illustrates an example of a method for enabling mediated reality and/or augmented reality and/or virtual reality;
fig. 6B illustrates an example of a method for updating a model of the virtual visual space for augmented reality;
fig. 7 illustrates a block diagram of a first method;
fig. 8 illustrates a block diagram of a second method; and
fig. 9 illustrates a block diagram of a third method.

### DEFINITIONS

a "point of view" is a perspective from a particular location and a particular orientation in space;
"artificial environment" may be something that has been recorded or generated;
"virtual visual space" refers to a fully or partially artificial environment that may be viewed which may be three dimensional;
"virtual visual scene" refers to a representation of the virtual visual space viewed from a particular point of view within the virtual visual space;
'virtual visual object' is a visible virtual object within a virtual visual scene;
"sound space" (or "virtual sound space") refers to an arrangement of sound sources in a three-dimensional space. A sound space may be defined in relation to recording sounds (a recorded sound space) and in relation to rendering sounds (a rendered sound space);
"sound scene" (or "virtual sound scene") refers to a representation of the sound space listened to from a particular point of view within the sound space;
"sound object" refers to sound source that may be located within the sound space. A source sound object represents a sound source within the sound space, in contrast to a sound source associated with an object in the virtual visual space. A recorded sound object represents sounds recorded at a particular microphone or position. A rendered sound object represents sounds rendered from a particular position;
"virtual space" may mean a virtual visual space, mean a sound space or mean a combination of a virtual visual space and corresponding sound space. In some examples, the virtual space may extend horizontally up to 360° and may extend vertically up to 180°;
"virtual scene" may mean a virtual visual scene, mean a sound scene or mean a combination of a virtual visual scene and corresponding sound scene;
'virtual object' is an object within a virtual scene, it may be an artificial virtual object (e.g. a computer-generated virtual object) or it may be an image of a real object in a real space that is live or recorded. It may be a sound object and/or a virtual visual object;
"virtual position" is a position within a virtual space. It may be defined using a virtual location and/or a virtual orientation. It may be considered to be a movable 'point of view'.
"correspondence" or "corresponding" when used in relation to a sound space and a virtual visual space means that the sound space and virtual visual space are time and space aligned, that is they are the same space at the same time;
"correspondence" or "corresponding" when used in relation to a sound scene and a virtual visual scene (or visual scene) means that the sound space and virtual visual space (or visual scene) are corresponding and a notional (virtual) listener whose point of view defines the sound scene and a notional (virtual) viewer whose point of view defines the virtual visual scene (or visual scene) are at the same location and orientation, that is they have the same point of view (same virtual position);
"real space" (or "physical space") refers to a real environment, which may be three dimensional;
"real scene" refers to a representation of the real space from a particular point of view within the real space;
"real visual scene" refers to a representation of the real space viewed from a particular point of view within the real space;
"mediated reality" in this document refers to a user visually experiencing a fully or partially artificial environment (a virtual space) as a virtual scene at least partially rendered by an apparatus to a user. The virtual scene is determined by a point of view within the virtual space. Displaying the virtual scene means providing it in a form that can be perceived by the user;
"augmented reality" in this document refers to a form of mediated reality in which a user experiences a partially artificial environment (a virtual space) as a virtual scene comprising a real scene of a physical real world environment (real space) supplemented by one or more visual or audio elements rendered by an apparatus to a user. The term augmented reality implies a mixed reality or hybrid reality and does not necessarily imply the degree of virtuality (vs reality) or the degree of mediality;
"virtual reality" in this document refers to a form of mediated reality in which a user experiences a fully artificial environment (a virtual visual space) as a virtual scene displayed by an apparatus to a user;
"virtual content" is content, additional to real content from a real scene, if any, that enables mediated reality by, for example, providing one or more artificial virtual objects;
"mediated reality content" is content which enables a user to visually experience a fully or partially artificial environment (a virtual space) as a virtual visual scene. Mediated reality content could include interactive content such as a video game or non-interactive content such as motion video;
"augmented reality content" is a form of mediated reality content which enables a user to visually experience a partially artificial environment (a virtual space) as a virtual visual scene. Augmented reality content could include interactive content such as a video game or non-interactive content such as motion video;
"virtual reality content" is a form of mediated reality content which enables a user to visually experience a fully artificial environment (a virtual space) as a virtual visual scene. Virtual reality content could include interactive content such as a video game or non-interactive content such as motion video;
"perspective-mediated" as applied to mediated reality, augmented reality or virtual reality means that user actions determine the point of view within the virtual space, changing the virtual scene;
"first person perspective-mediated" as applied to mediated reality, augmented reality or virtual reality means perspective mediated with the additional constraint that the user's real point of view (location and/or orientation) determines the point of view within the virtual space;
"third person perspective-mediated" as applied to mediated reality, augmented reality or virtual reality means perspective mediated with the additional constraint that the user's real point of view does not determine the point of view within the virtual space;
"user interactive" as applied to mediated reality, augmented reality or virtual reality means that user actions at least partially determine what happens within the virtual space;
"displaying" means providing in a form that is perceived visually (viewed) by the user;
"rendering" means processing for output in a form that is perceived by the user;
"notional listener" defines the point of view in virtual space used to generate a perspective-mediated sound scene, irrespective of whether or not a user is actually listening;
"notional viewer" defines the point of view in virtual space used to generate a perspective-mediated visual scene, irrespective of whether or not a user is actually viewing.

### DESCRIPTION

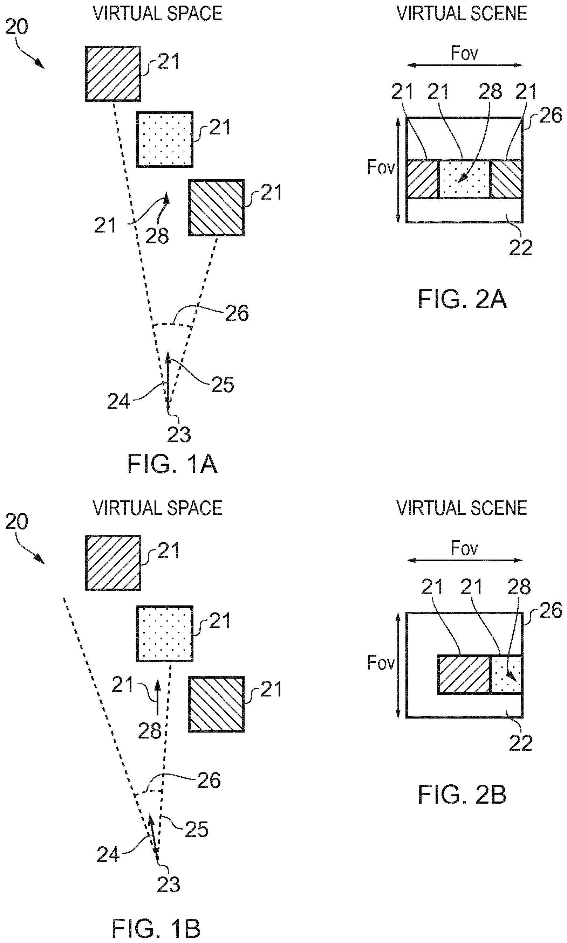

Figs 1A-1C and 2A-2C illustrate examples of mediated reality. The mediated reality may be augmented reality or virtual reality.

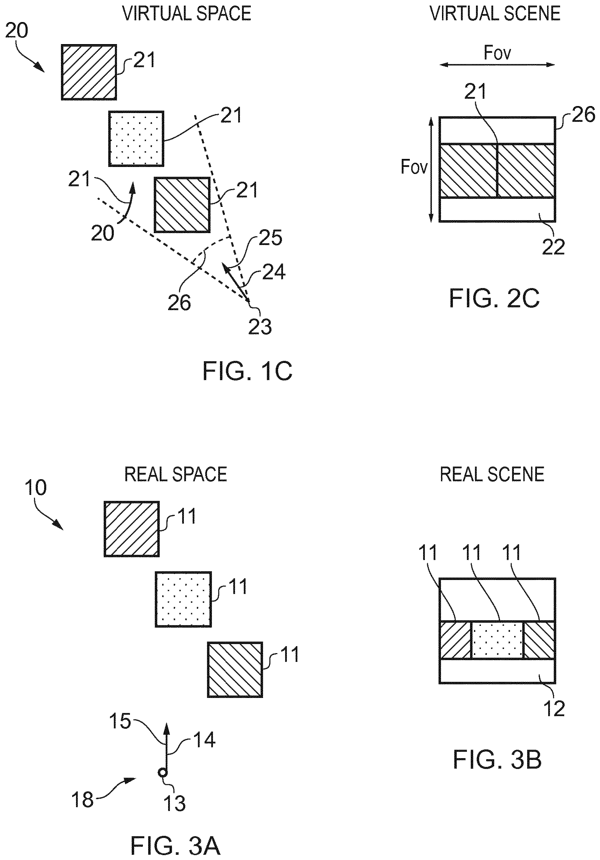

Figs 1A, 1B, 1C illustrate the same virtual visual space 20 comprising the same virtual visual objects 21, however, each fig illustrates a different virtual point of view 24 of a user. The virtual location 23 and virtual direction 25 of a virtual point of view 24 of the user can change independently. The direction 25 but not the location 23 of the virtual point of view 24 of the user changes from fig 1A to fig 1B. The direction 25 and the location 23 of the virtual point of view 24 of the user changes from fig 1B to fig 1C.
Figs 2A, 2B, 2C illustrate a virtual visual scene 22 from the perspective of the different virtual points of view 24 of the user of respective figs 1A, 1B, 1C. The virtual visual scene 22 is determined by the virtual point of view 24 of the user within the virtual visual space 20 and a field of view 26. The virtual visual scene 22 is at least partially displayed to the user.

The virtual visual scenes 22 illustrated may be mediated reality scenes, virtual reality scenes or augmented reality scenes. A virtual reality scene displays a fully artificial virtual visual space 20. An augmented reality scene displays a partially artificial, partially real virtual visual space 20.

The mediated reality, augmented reality or virtual reality may be user interactive-mediated. In this case, user actions at least partially determine what happens within the virtual visual space 20. This may enable interaction with a virtual object 21 such as a visual element 28 within the virtual visual space 20. For example, the user may be able to select and move the virtual object 21.

The mediated reality, augmented reality or virtual reality may be perspective-mediated. In this case, user actions determine the virtual point of view 24 of the user within the virtual visual space 20, changing the virtual visual scene 22. For example, as illustrated in figs 1A, 1B, 1C a virtual location 23 of the virtual point of view 24 of the user within the virtual visual space 20 may be changed and/or a direction or orientation 25 of the virtual point of view 24 of the user 18 within the virtual visual space 20 may be changed. If the virtual visual space 20 is three-dimensional, the virtual location 23 of the virtual point of view 24 of the user has three degrees of freedom (e.g. up/down, forward/back, left/right) and the direction 25 of the virtual point of view 24 of the user within the virtual visual space 20 has three degrees of freedom (e.g. roll, pitch, yaw). The virtual point of view 24 of the user may be continuously variable in virtual location 23 and/or direction 25 and user action then changes the location and/or direction of the virtual point of view 24 of the user continuously. Alternatively, the virtual point of view 24 of the user may have discrete quantized locations 23 and/or discrete quantized directions 25 and user action switches by discretely jumping between the allowed locations 23 and/or directions 25 of the virtual point of view 24 of the user.

Fig 3A illustrates an example of a real space 10 comprising real objects 11 that partially correspond with the virtual visual space 20 of Fig 1A. In this example, each real object 11 in the real space 10 has a corresponding virtual object 21 in the virtual visual space 20, however, each virtual object 21 in the virtual visual space 20 does not have a corresponding real object 11 in the real space 10. In this example, one of the virtual objects 21, the computer-generated visual element 28, is an artificial virtual object 21 that does not have a corresponding real object 11 in the real space 10.

A linear mapping may exist between the real space 10 and the virtual visual space 20 and the same mapping exists between each real object 11 in the real space 10 and its corresponding virtual object 21. The relative relationship of the real objects 11 in the real space 10 is therefore the same as the relative relationship between the corresponding virtual objects 21 in the virtual visual space 20.

Fig 3B illustrates an example of a real visual scene 12 that partially corresponds with the virtual visual scene 22 of Fig 1A, it includes real objects 11 but not artificial virtual objects. The real visual scene is from a point of view 14 corresponding to the virtual point of view 24 of the user in the virtual visual space 20 of Fig 1A. The real visual scene content is determined by that corresponding virtual point of view 24 of the user and the field of view 26 in virtual space 20 (point of view 14 in real space 10).

Fig 2A may be an illustration of an augmented reality version of the real visual scene 12 illustrated in Fig 3B. The virtual visual scene 22 comprises the real visual scene 12 of the real space 10 supplemented by one or more visual elements 28 displayed by an apparatus to the user. The visual elements 28 may be a computer-generated visual element. In a see-through arrangement, the virtual visual scene 22 comprises the actual real visual scene 12 which is seen through a display of the supplemental visual element(s) 28. In a see-video arrangement, the virtual visual scene 22 comprises a displayed real visual scene 12 and displayed supplemental visual element(s) 28. The displayed real visual scene 12 may be based on an image from a single virtual point of view 24 of the user or on multiple images from different points of view at the same time, processed to generate an image from a single virtual point of view 24 of the user.

In augmented reality, the virtual content 28 is one or more virtual objects 21. The virtual scene 22 comprises the real scene 12, augmented or not by virtual content in dependence upon the virtual point of view 24 of the user 18.

In virtual reality, the virtual content 28 is the whole of the virtual scene and all virtual objects 21 within it. The virtual scene 22 comprises only the virtual content 28 determined in dependence upon the virtual point of view 24 of the user.

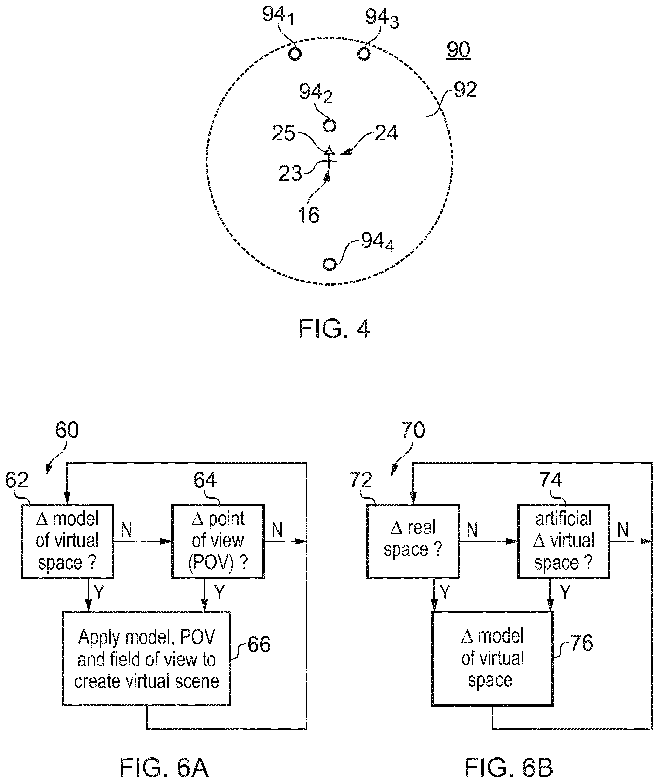

Fig. 4 illustrates, from a top perspective, an example of a sound space 90 that corresponds to the virtual visual space 20. Fig. 4 is a two-dimensional projection or cross-section of the three-dimensional sound space 90. The sound space 90 defines a sound scene 92.

In some but not necessarily all examples, the virtual visual space 20 and the sound space 90 may be corresponding and form a combined virtual space 90, 20. "Correspondence" or "corresponding" when used in relation to a sound space and a virtual visual space means that the sound space 90 and virtual visual space 20 are time and space aligned as combined virtual space 90, 20, that is they are the same space at the same time.

The correspondence between virtual visual space 20 and sound space 90 results in correspondence between the virtual visual scene 22 and the sound scene 92 to form a combined virtual scene 92, 22. "Correspondence" or "corresponding" when used in relation to a sound scene 92 and a virtual visual scene 22 means that the sound space 90 and virtual visual space 20 are corresponding and a notional listener (user) whose point of view defines the sound scene 92 and a notional viewer (user) whose point of view defines the virtual visual scene 22 are at the same location and orientation, that is they are the same virtual point of view 24 of the same user.

In fig. 4, the sound space 90 and the virtual visual space 20 form a combined virtual space 90, 20. The sound space 90 is an arrangement of sound sources 94 in a three-dimensional space. In this example, the sound space 90 is a rendered sound space and the sound sources 94 comprise sound objects.

The sound space 90 defines a sound scene 92 that corresponds to the virtual visual scene 22. The sound scene 92 and the virtual visual scene 22 form a combined virtual scene 92, 22. The sound scene 92 is a representation of the sound space 90 listened to from a particular virtual point of view 24 of the user 18 within the sound space 90. The sound scene 92 is first person perspective-mediated. The user's real point of view 14 determines the virtual point of view 24 within the sound space, changing the sound scene 92.

In this example, the virtual point of view 24 of the user 18 within the sound space 90 corresponds to the virtual point of view 24 of the user 18 within the virtual visual space 20 and the same label is used. The virtual scene 92, 22 is first person perspective-mediated. The user's real point of view 14 determines the virtual point of view 24 within the combined virtual space 90, 20, changing the combined virtual scene 92, 22.

Correspondence in this sense means that there is a one-to-one mapping between the sound space 90 and the virtual visual space 20 such that a position in the sound space 90 has a corresponding position in the virtual visual space 20 and a position in the virtual visual space 20 has a corresponding position in the sound space 90. Correspondence in this sense means that there is a one-to-one mapping between the sound scene 92 and the virtual visual scene 22 such that a position in the sound scene 92 has a corresponding position in the virtual visual scene 22 and a position in the virtual visual scene 22 has a corresponding position in the sound scene 92. Corresponding also means that the coordinate system of the sound space 90/sound scene 92 and the coordinate system of the virtual visual space 20/virtual visual scene 22 are in register such that an object is positioned as a sound object in the sound scene and as a visual object in the visual scene at the same common position from the perspective of the user 18.

In this illustrated example, the user actions determine the virtual point of view 24 of the user 18 within the sound space 90 (and virtual visual space 20), changing the sound scene 92 and the virtual visual scene 22 simultaneously. For example, a virtual location 23 of the virtual point of view 24 of the user 18 within the virtual space 92, 20 may be changed and/or a direction or orientation 25 of the virtual point of view 24 of the user 18 within the virtual space 92, 20 may be changed. If the virtual space 92, 20 is three-dimensional, the virtual location 23 of the virtual point of view 24 of the user 18 has three degrees of freedom e.g. up/down, forward/back, left/right and the direction 25 of the virtual point of view 24 of the user 18 within the virtual visual space 20 has three degrees of freedom e.g. roll, pitch, yaw. The virtual point of view 24 of the user 18 may be continuously variable in virtual location 23 and/or direction 25 and user action then changes the location and/or direction of the virtual point of view 24 of the user 18 continuously. Alternatively, the virtual point of view 24 of the user 18 may have discrete quantized locations 23 and/or discrete quantized directions 25 and user action switches by discretely jumping between the allowed locations 23 and/or directions 25 of the virtual point of view 24 of the user.

The functionality that enables control of a virtual visual space 20 and the virtual visual scene 26 dependent upon the virtual visual space 20 and the functionality that enables control of a sound space and the sound scene 92 dependent upon the sound space 90 may be provided by the same apparatus, system, method or computer program.

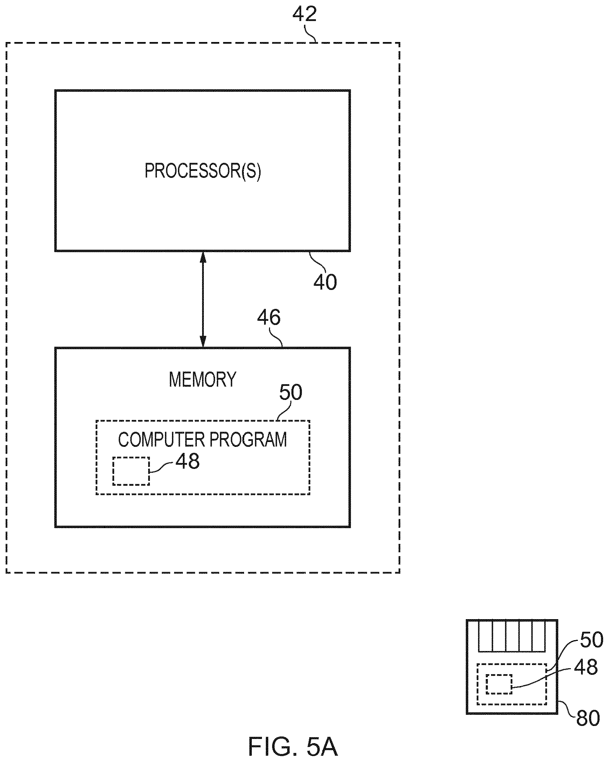

Fig. 5A illustrates an example of an apparatus 42 which may, for example, be a chip or a chipset. The apparatus 42 comprises at least one processor 40 and at least one memory 46. The at least one processor 40 might, for example, include a central processing unit (CPU) and a graphics processing unit (GPU). The processor 40 and memory 46 are referred to in the singular below for clarity reasons, but it will be appreciated that more than one processor 40 and more than one memory 46 may be provided.

The processor 40 is configured to read from and write to the memory 46. The processor 40 may also comprise an output interface via which data and/or commands are output by the processor 40 and an input interface via which data and/or commands are input to the processor 40.

The memory 46 is illustrated as storing a computer program 50 which includes computer program instructions/code 48. The processor 40, by reading the memory 46, is able to load and execute the computer program 48. The computer program code 48 controls the operation of the processor 40 when the computer program code 48 is loaded into the processor 40. The computer program 50 comprising the computer program code 48 can be stored on one or more (non-transitory) computer readable media 80 (memory sticks, memory cards, discs, etc.).

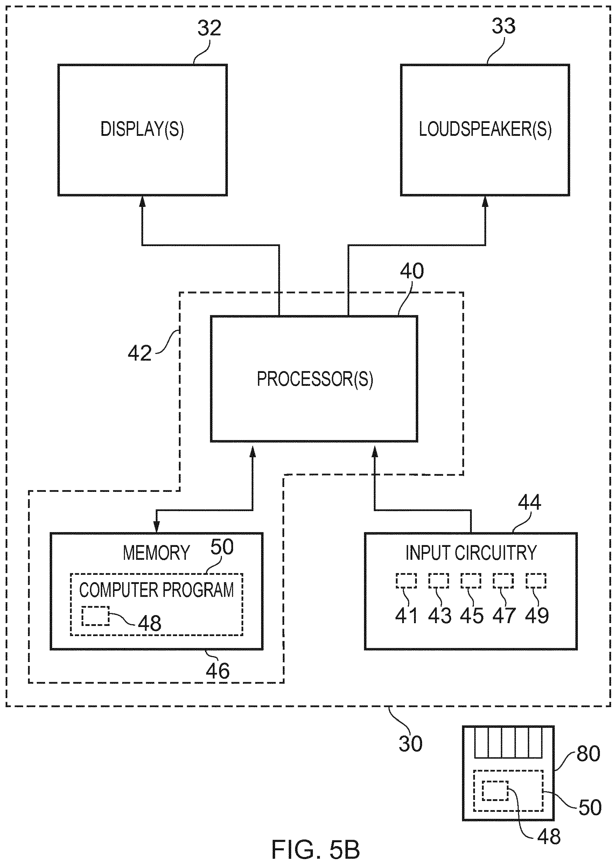

Fig. 5B illustrates an example of a further apparatus 30. The further apparatus 30 is operable to enable mediated reality and/or augmented reality and/or virtual reality. The apparatus 30 may, for example, be or comprise a head-mounted viewing apparatus/device.

The apparatus 30 illustrated in fig. 5B comprises the apparatus 42 illustrated in fig. 5A. The apparatus 30 also comprises one or more displays 32 and input circuitry 44. The apparatus 30 might further comprise one or more loudspeakers 33 and/or one or more user output devices for providing haptic feedback to the user (not shown in fig. 5B).

The one or more displays 32 provide information to a user visually. The description below refers to a single display for clarity, but more than one display could be provided.

The display 32 is for providing at least parts of the virtual visual scene 22 to a user 18 in a form that is perceived visually by the user 18. The display 32 may be a visual display that provides light that displays at least parts of the virtual visual scene 22 to a user 18. Examples of visual displays include liquid crystal displays, organic light emitting displays, emissive, reflective, transmissive and transflective displays, direct retina projection display, near eye displays etc.

The one or more loudspeakers 33, which provide information to the user aurally. The loudspeakers 33 might, for example, be separated binaural loudspeakers in a head-mounted audio (HMA) device. The head-mounted audio device may be a separate device from the head-mounted viewing device mentioned above, or form part of the same head-mounted device.

The one or more displays 32 and the one or more loudspeakers 33 are controlled by one or more processors 40.

The computer program code 48 stored in the memory 46 controls the operation of the apparatus 30 when loaded into the processor 40. The computer program code 48 provide the logic and routines that enables the apparatus to perform at least the methods illustrated in figs 6A, 6B and 7 to 9.

The input circuitry 44 is configured to provide inputs to the processor 40. The input circuitry 44 may, for example, include one or more of the following: communication circuitry 41, user input circuitry 43, one or more point of view sensors 45, one or more image sensors 47 and one or more depth sensors 49.

The apparatus 30 may enable user-interactive mediation for mediated reality and/or augmented reality and/or virtual reality. The user input circuitry 43 tracks (detects over time) user actions. These user actions are used by the processor 40 to determine what happens within the virtual space. This may enable interaction with a visual element 28 within the virtual visual space 20.

If the apparatus 30 is or comprises a head-mounted viewing device 30, in some implementations, some or all of the user input circuitry 43 might form part of that head-mounted viewing device. The user input circuitry 43 might, for example, include one or more buttons or switches. In some implementations, the user input circuitry 43 might be separate from, but connected to (for example, in a wired or wireless manner) to the head-mounted viewing device. The user input circuitry 43 might, for example, include one or more hand-held controllers. Such hand-held controllers might include one or more buttons, switches, keys or analog sticks.

The user input circuitry 43 comprises one or more air pressure sensors that are configured to sense a user exhaling and inhaling (without the user speaking). The one or more air pressure sensors might, for example, include a conduit (such as a tube) to enable a user to provide input by sucking/inhaling and blowing/exhaling. The one or more air pressure sensors may be configured to sense a magnitude of a change in air pressure and/or a direction (blowing/exhaling versus inhaling/sucking) of a change in air pressure.

In some embodiments, the one or more air pressure sensors might be dedicated sensors that are able to sense a user exhaling/blowing (while the user is not speaking) and/or a user inhaling/sucking (while the user is not speaking). In other embodiments, the one or more air pressure sensors might include one or more microphones that are able sense a user exhaling/blowing (while the user is not speaking) and/or a user inhaling/sucking (while the user is not speaking), for example, via diaphragm movement of the microphone(s).

If the apparatus 30 is or comprises a head-mounted viewing device 30, the one or more air pressure sensors may be integrated into the head-mounted viewing device, or be separate from but connected to the head-mounted viewing device.

Reference is made to a single air pressure sensor below for clarity but, as explained above, more than one air pressure sensor might be provided.

The apparatus 30 may enable perspective mediation for mediated reality and/or augmented reality and/or virtual reality. The input circuitry 44 tracks (detects over time) user actions. These user actions are used by the controller 42 to determine the virtual point of view 24 of the user 18 within the virtual space, changing the virtual scene. The virtual point of view 24 of the user 18 may be continuously variable in location and/or direction and user action changes the location and/or direction of the virtual point of view 24 of the user 18. Alternatively, the virtual point of view 24 of the user 18 may have discrete quantized locations and/or discrete quantized directions and user action switches by jumping to the next location and/or direction of the virtual point of view 24 of the user 18.

The apparatus 30 may enable first person perspective for mediated reality, augmented reality or virtual reality. The input circuitry 44 detects the user's real point of view 14 and changes in that real point of view 14 using the point of view sensor(s) 45. The user's real point of view is used by the processor 40 to determine his virtual point of view 24 within the virtual space 20, changing the virtual scene 22. Referring back to fig. 3A, a user 18 has a real point of view 14. The real point of view may be changed by the user 18. For example, a real location 13 of the real point of view 14 is the location of the user 18 and can be changed by changing the physical location 13 of the user 18. For example, a real direction 15 of the real point of view 14 is the direction in which the user 18 is looking and can be changed by changing the real direction of the user 18. The real direction 15 may, for example, be changed by a user 18 changing an orientation of their head or view point and/or a user changing a direction of their gaze.

The head-mounted viewing device 30 may be used to enable first-person perspective mediation by measuring a change in location and/or a change in orientation of the user's head and/or a change in the user's direction of gaze.

The one or more point of view sensors 45 might use positioning technology such as GPS, HAIP (high-accuracy indoor positioning), triangulation (trilateration) by transmitting to multiple receivers and/or receiving from multiple transmitters, acceleration detection and integration in order to determine a new physical location 13 of the user 18 and real point of view 14.

The one or more point of view sensors 45 might include one or more accelerometers, electronic gyroscopes or electronic compasses to determine a change in an orientation of a user's head or view point and a consequential change in the real direction 15 of the real point of view 14.

The one or more point of view sensors 45 might include pupil tracking technology, based for example on computer vision, to track movement of a user's eye or eyes and therefore determine a direction of a user's gaze and consequential changes in the real direction 15 of the real point of view 14.

The one or more image sensors 47 may be arranged to image the real space 10.

An example of an image sensor 47 is a digital image sensor that is configured to operate as a camera. Such a camera may be operated to record static images and/or video images. In some, but not necessarily all embodiments, cameras may be configured in a stereoscopic or other spatially distributed arrangement so that the real space 10 is viewed from different perspectives. This may enable the creation of a three-dimensional image and/or processing to establish depth, for example, via the parallax effect.

The one or more depth sensors 49 may comprise a transmitter and a receiver. The transmitter transmits a signal (for example, a signal a human cannot sense such as ultrasound or infrared light) and the receiver receives the reflected signal. Using a single transmitter and a single receiver some depth information may be achieved via measuring the time of flight from transmission to reception. Better resolution may be achieved by using more transmitters and/or more receivers (spatial diversity). In one example, the transmitter is configured to 'paint' the real space 10 with structured light, preferably invisible light such as infrared light, with a spatially dependent pattern. Detection of a certain pattern by the receiver allows the real space 10 to be spatially resolved. The distance to the spatially resolved portion of the real space 10 may be determined by time of flight and/or stereoscopy (if the receiver is in a stereoscopic position relative to the transmitter).

The communication circuitry 41 may be provided in addition to, or as an alternative to, one or more of the image sensors 47 and the depth sensors 49. Such communication circuitry 41 may communicate with one or more remote image sensors 47 in the real space 10 and/or with remote depth sensors 49 in the real space 10.

The apparatus 30 may enable mediated reality and/or augmented reality and/or virtual reality, for example using the method 60 illustrated in fig 6A or a similar method. A model of the virtual space 20 may be stored and maintained by the processor 40 which includes a mapping between the physical space 10 and the virtual space 20. The model may be formed, at least in part, by the execution of the computer program code 48 by the processor 40.

Some aspects of the model may be provided to the processor 40. For example, sensors in input circuitry 44 may optionally be used to create overlapping depth maps of the real space from different points of view, to which virtual content is added, in order to produce/change the model.

Each real location 13 in the physical space 10, through the mapping, has a corresponding virtual location 23 in the virtual space 20 and vice versa. Each real orientation 15 in the physical space 10, through the mapping, has a corresponding virtual orientation 25 in the virtual space 20 and vice versa.

There are many different technologies that may be used to create a depth map. An example of a passive system, used in the Kinect ™ device, is when an object is painted with a non-homogenous pattern of symbols using infrared light and the reflected light is measured using multiple cameras and then processed, using the parallax effect, to determine a location of the object.

At block 62 it is determined whether or not the model of the virtual space 20 has changed. If the model of the virtual visual space 20 has changed the method moves to block 66. If the model of the virtual visual space 20 has not changed the method moves to block 64.

At block 64 it is determined whether or not the virtual point of view 24 of the user 18 in the virtual visual space 20 has changed. If the virtual point of view 24 of the user 18 has changed the method moves to block 66. If the virtual point of view 24 of the user 18 has not changed the method returns to block 62.

At block 66, a two-dimensional projection of the three-dimensional virtual visual space 20 is taken from the virtual location 23 and in the direction 25 defined by the current virtual point of view 24 of the user 18. The projection is limited by the field of view 26 to produce the virtual visual scene 22. The projection may also define the sound scene. The method then returns to block 62.

Fig 6B illustrates an example of a method 70 for updating a model of the virtual visual space 20 for augmented reality. Where the apparatus 30 enables augmented reality, the virtual visual space 20 comprises objects 11 from the real space 10 and also visual elements 28 not present in the real space 10. The combination of such visual elements 28 may be referred to as the artificial virtual visual space.

At block 72 it is determined whether or not the real space 10 has changed. If the real space 10 has changed the method moves to block 76. If the real space 10 has not changed the method moves to block 74. Detecting a change in the real space 10 may be achieved at a pixel level using differencing and may be achieved at an object level using computer vision to track objects as they move.

At block 74 it is determined whether or not the artificial virtual visual space has changed. If the artificial virtual visual space has changed the method moves to block 76. If the artificial virtual visual space has not changed the method returns to block 72. As the artificial virtual visual space is generated by the controller 42 changes to the visual elements 28 are easily detected.

At block 76, the model of the virtual visual space 20 is updated.

The blocks illustrated in figs 6A & 6B may represent steps in a method and/or sections of code in the computer program 50. The illustration of a particular order to the blocks does not necessarily imply that there is a required or preferred order for the blocks and the order and arrangement of the block may be varied. Furthermore, it may be possible for some blocks to be omitted.

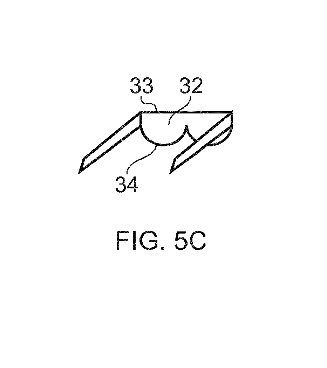

Fig 5C illustrates a head-mounted viewing device 30 that may comprise some or all of the components of the apparatus 30 illustrated in fig. 5B. In fig. 5C, the illustrated head-mounted viewing device 33 comprises comprising one or more displays 32 that provide visual information to a user 18. The head-mounted apparatus 33 may be moved automatically when a head of the user 18 moves.

The head-mounted apparatus 33 may house the sensors 45 (not illustrated) for point of view detection that detect a location and orientation of the apparatus 33 or an orientation of the apparatus 33.

The head-mounted apparatus 33 may house the sensors 45 (not illustrated) for gaze direction detection and/or selection gesture detection.

The head-mounted apparatus 33 may be a see-through head-mounted viewing device for augmented reality that enables a live real visual scene 12 to be viewed while one or more visual elements 28 are displayed by the display 32 to the user 18 to provide in combination the virtual visual scene 22. In this case a visor 34, if present, is transparent or semi-transparent so that the live real visual scene 12 can be viewed through the visor 34.

The head-mounted viewing device 33 may be operated as a see-video arrangement for augmented reality that enables a live or recorded video of a real visual scene 12 to be displayed by the display 32 for viewing by the user 18 while one or more visual elements 28 are simultaneously displayed by the display 32 for viewing by the user 18. In this case a visor 34 is opaque and may be used as the display 32.

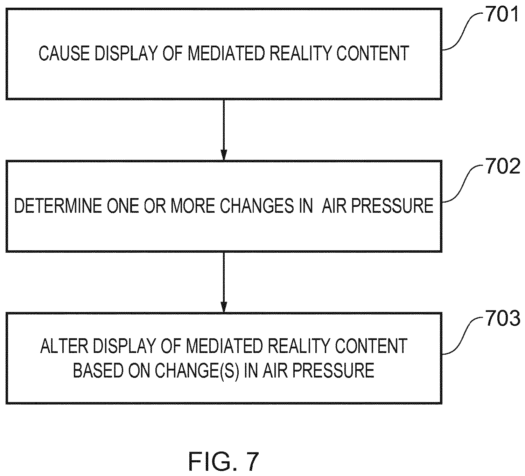

Fig. 7 illustrates a flow chart of a first method. In block 701 of fig. 7, the processor 40 causes display of mediated reality content on the display 32 of a head-mounted viewing device 30/33, such as those described above in relation to figures 5B and 5C above.

The mediated reality content is viewable by the user 18 on the display 32 and may, for example, be rendered by the processor 40 when the processor 40 executes the computer program code 48. The mediated reality content may, for example, be virtual reality content or augmented reality content and may be displayed by maintaining the model referred to above in relation to figures 6A and 6B.

At block 702 in fig. 7, the user 18 provides user input to the air pressure sensor of the input circuitry 44 by exhaling and/or inhaling (blowing and/or sucking) without speaking. The user 18 may merely exhale, merely inhale or perform a particular exhaling and inhaling pattern. This is detected by the air pressure sensor, which provides one or more corresponding inputs to the processor 40. The processor 40 analyses the input(s) provided by the air pressure sensor and detects that one or more changes in air pressure have occurred which were caused by the user inhaling and/or exhaling without speaking.

At block 703 in fig. 7, the processor 40 alters the display of the mediated reality content that is displayed by the display 32 of the head-mounted viewing device 30/33 based, at least in part, on the detected one or more changes in air pressure. The processor 40 might, for example, alter an appearance of at least one virtual object 21 that forms part of the displayed mediated reality content. The extent to which the mediated reality content is altered may depend on a magnitude of the detected change(s) in air pressure.

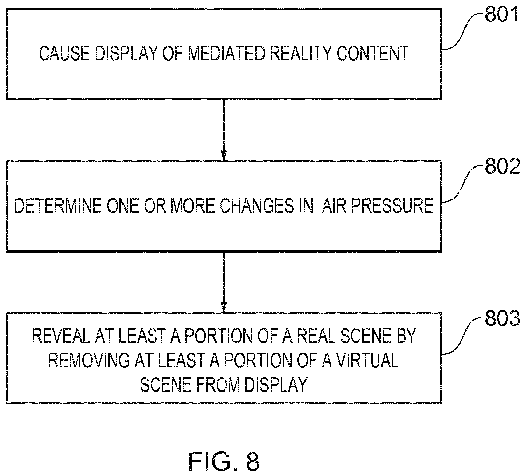

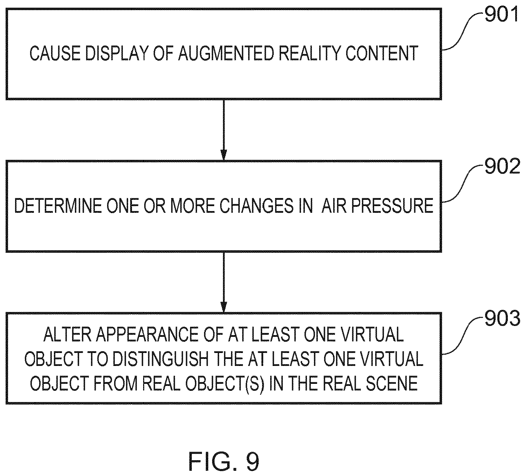

Figures 8 and 9 illustrate flow charts of second and third methods. The second and third methods are more detailed versions of the first method.

In the second method illustrated in fig. 8, the mediated reality content might be augmented mediated reality or virtual reality content. As explained above, in virtual reality, the user 18 experiences a fully artificial environment as a virtual visual scene. For example, when the user 18 wears the head-mounted viewing device 30 to view the virtual reality content, he cannot see a real scene 12 or a real scene 12 forms a very small part of his field of view 26, at the periphery of his field of view 26 (such as at the bottom, top and/or sides of his field of view 26). The real scene 12 is not interwoven with the virtual scene 22 that the user 18 sees and is only visible because the display 32 does not encompass the whole of the user's field of view, potentially due to technical limitations.

In block 801 in fig. 8, the processor 40 causes display of mediated reality content on the display 32 of a head-mounted viewing device 30/33, such as those described above in relation to figures 5B and 5C above. The mediated reality content is viewable by the user 18 on the display 32 and may, for example, be rendered by the processor 40 when the processor 40 executes the computer program code 48. The mediated reality content may, for example, be displayed by maintaining the model referred to above in relation to figures 6A and 6B.

In this example, the user 18 decides that he wishes to see a least a part of real space 20 that is at least partially obscured by the fully or partially artificial environment provided by virtual reality content or augmented reality content. He might, for example, hear somebody moving in real space 20 nearby (such as a person or animal walking by) and wish to see his real surroundings to check who is there.

In block 802 in fig. 8, the user 18 provides user input to the air pressure sensor of the input circuitry 44 by exhaling and/or inhaling (blowing and/or sucking) without speaking. This is detected by the air pressure sensor, which provides one or more corresponding inputs to the processor 40. The processor 40 analyses the input(s) provided by the air pressure sensor and detects that one or more changes in air pressure have occurred which were caused by the user inhaling and/or exhaling without speaking.

In block 803 of fig. 8, the processor 40 alters the display of the mediated reality content that is displayed by the display 32 of the head-mounted viewing device 30/33 based, at least in part, on the detected one or more changes in air pressure.

In some implementations, the processor 40 must detect that the air pressure is above or below a particular threshold before altering the display of the mediated reality content that is displayed by the display 32.

The mediated reality content may be altered by removing at least a portion of a displayed (visual) virtual scene 22 from display by the display 32, and replacing it with at least a portion of a (visual) real scene 12. The removal of a portion of the virtual scene 22 might involve removing one or more virtual objects 21 from display.

The (portion of the) real scene 12 may be revealed by the removal (portion of the) virtual scene 22 from display by the display 32. An example is described below in the context of a portion (rather than the whole of) the virtual scene 22 being removed from display, but it will be appreciated that the whole of the virtual scene 22 could be removed from display.

In some implementations, a see-through arrangement is provided by the head-mounted viewing device 30/33, and removal of a portion of the displayed virtual scene 22 from display enables the user 18 to see a portion of a live real visual scene 12 through the display 32 (and the visor 34, if present).

In other implementations, a see-video arrangement is provided by the head-mounted viewing device 30/33. In these implementations, when a portion of the displayed virtual scene 22 is removed from display it reveals a live video of a portion of a real scene 12, which is displayed by the display 32 for viewing by the user 18.

The removal of a portion of the virtual scene 22 may reveal a portion of a real scene that is positioned behind the removed portion of the virtual scene 22. In a see-through arrangement, the portion of the real scene 12 that is revealed may be physically positioned behind a position at which the virtual scene 22 is seen by the user 18 when it is displayed by the display 32, such that removal of a portion of the virtual scene 22 reveals a portion of a real scene 12 that is physically positioned behind the displayed virtual scene 22 in the real world.

In a see-video arrangement, the portion of the real scene 12 that is revealed may also be physically positioned behind a position at which the virtual scene 22 is seen by the user 18 when it is displayed by the display 32. However, in this implementation it is the manner in which the processor 40 causes the live video real scene 12 to be displayed on the display 32 that makes the portion of the real scene 12 appear behind the virtual scene 22 as the portion of the virtual scene 22 is removed from display.

In effect, the removal of the portion of the virtual scene 22 provides a viewing window into the real space 10 for the user 18. In the see-through arrangement, this is a real, transparent window. In the see-video arrangement, this is not a real window but the effect might be substantially the same. If the live video of the portion of the real scene 22 is provided at a very high fidelity (for example, a very high resolution, a very high frame rate and a wide color gamut, *inter alia*), it might be indistinguishable from a see-through arrangement.

The size of the viewing window into the real scene 12 that is provided by the removal of the portion of the virtual scene 22 might depend upon a magnitude and/or a duration of the change(s) in air pressure that are detected in block 802 in fig. 8. That is, the size of the user's field of view of real space 10 may depend upon a magnitude and/or a duration of the change(s) in air pressure. Alternatively or additionally, the speed at which the viewing window is formed might depend upon a magnitude of the change(s) in air pressure that are detected in block 802 in fig. 8.

For example, the harder the user 18 blows or sucks, the larger the viewing window that is created into the real scene 12 and/or the quicker the viewing window is created into the real scene 12 by the removal of the portion of the virtual scene 12. Alternatively or additionally, the longer the user 18 blows or sucks, the larger the viewing window that is created into the real scene 12 by the removal of the portion of the virtual scene 12.

The processor 40 might, for instance, respond to a change in air pressure of a first magnitude and/or a first duration by causing a first viewing window of a first size to appear in the virtual scene 22 at a first distance away from the user 18 in virtual space 20, and might respond to a change in air pressure of a second magnitude and/or a second duration by causing a second viewing window of a second size to appear in the virtual scene 22 at a second distance away from the user 18 in virtual space 20, where: the second magnitude is greater than the first magnitude, the second duration is longer than the first duration, second size is greater than the first size, and/or the second distance is greater than the first distance (all combinations are possible). The second size might be greater than the first size in an implementation in which the first and second distances are the same. That is, in such an implementation, the viewing window appears at a fixed distance each time. The fixed distance might be user-configurable (for example, via a settings menu).

The viewing window could be any shape, such as circular, oval, rectangular, square, etc. In some implementations, the size and the shape of the viewing window might depend upon how the user's real point of view 14 changes and/or how the direction of the user's gaze changes while change(s) in air pressure is/are occurring (as detected by the processor 40 by inputs from the air pressure sensor(s)). This may enable the user 18 to create a viewing window into the real space 10 which has a shape and size desired by him. The user 18 may, for example, change the position and orientation of his head and/or the direction of his gaze in order to create a viewing window of a particular shape and size.

In some implementations, the user 18 may create multiple, separate, viewing windows into real space 10 that are displayed simultaneously. Each viewing window may be created in the manner described above.

The user 18 is able to provide user input to cause the viewing window that was created in block 803 of fig. 8 to be removed/closed. That is, the portion of the real scene 12 is replaced by a portion of a virtual scene 22. The virtual space 20 may change overtime and the user's point of view 14 may change, so the portion of the virtual scene 22 that replaces the portion of the real scene 12 need not be the same as that which was removed from display to create the viewing window (and vice-versa).

In some implementations, the user input that is provided to close the viewing window is the inverse of the user input that was provided to create the viewing window. For example, if the processor 40 responds to the user 18 providing a blowing/exhaling input by creating the viewing window, it might respond to the user 18 providing a sucking/inhaling input by closing the viewing window.

In other implementations, the user 18 might be able to close the viewing window by pressing a button on a hand-held controller or by providing a gesture input, for example. A gesture input might involve the user 18 gesturing to wipe the viewing window away, in order to close it. The viewing window might disappear after a particular period of time has expired. The particular period of time might be predefined and/or may be (re)configurable by the user 18.

In the third method illustrated in fig. 9, the mediated reality content is augmented mediated reality content.

In block 901 in fig. 9, the processor 40 causes display of augmented reality content on the display 32 of a head-mounted viewing device 30/33, such as those described above in relation to figures 5B and 5C above. The augmented reality content is viewable by the user 18 on the display 32 and may, for example, be rendered by the processor 40 when the processor 40 executes the computer program code 48. The augmented reality content may, for example, be displayed by maintaining the model referred to above in relation to figures 6A and 6B.

In block 902 in fig. 9, the user 18 provides user input to the air pressure sensor of the input circuitry 44 by exhaling and/or inhaling (blowing and/or sucking) without speaking. This is detected by the air pressure sensor, which provides one or more corresponding inputs to the processor 40. The processor 40 analyses the input(s) provided by the air pressure sensor and detects that one or more changes in air pressure have occurred which were caused by the user inhaling and/or exhaling without speaking.

In block 803 of fig. 8, the processor 40 alters an appearance of at least one virtual object 21 displayed by the display 32 of the head-mounted viewing device 30/33 based, at least in part, on the detected one or more changes in air pressure. Altering the appearance of the virtual object(s) 21 in the virtual scene 22 distinguishes the virtual object(s) 21 from any real objects 11 that are present in the real scene 12 which remain unchanged (that is, their appearance remains unaltered). The virtual object(s) 12 and the real object(s) 11 are simultaneously viewable by the user 18 (that is, both the virtual object(s) 21 and the real object(s) 11 are simultaneously within the user's field of view), enabling the user 18 to tell which objects are virtual (because their appearance has been altered), and which objects are real (because their appearance has not been altered).

In some implementations, the processor 40 must detect that the air pressure is above or below a particular threshold before altering the appearance of a virtual object in block 903 of fig. 9.

The appearance of a virtual object 21 can be altered in a number of different ways. Altering the appearance of a virtual object 21 may comprise highlighting the at least one virtual object 21. A virtual object 21 may be highlighted by:
- moving the virtual object 21 (for example, causing it to vibrate);
- causing the virtual object 21 to blink/flash;
- displaying a border around the virtual object 21;
- altering the size of the virtual object 21 (for example, making the virtual object 21 larger or smaller)
- altering the color of the virtual object 21 (for example, changing a tint, shade or tone of the virtual object 21);
- altering the brightness of the virtual object 21 (for example, changing how the virtual object 21 is lit);
- altering the translucency of the virtual object 21 (making the virtual object 21 more or less translucent); and/or
- altering the focus of the virtual object 21 (making the virtual object 21 appear more or less blurry).

In some implementations, the processor 40 responds to the detected change(s) in air pressure by altering the appearance of every virtual object 21 that is displayed in a currently displayed virtual scene 22 when the change(s) in air pressure are detected. In other implementations, only the appearance of any virtual objects 21 at a particular location or at particular locations (or within a particular volume or particular volumes of virtual space 20), relative to the user's virtual point of view 24, are altered. The virtual objects 21 may be selected relative to the user's virtual point of view 24, which may be determined using the user's real point of view 14 (as described above). For example, the virtual objects 21 may be selected based, at least in part, on the orientation of the user's and/or the direction of the user's gaze when the change(s) in air pressure are detected.

The size and/or location of the volume or volumes within which the appearance of any virtual objects 21 is changed may depend upon the magnitude and/or the duration of the change in air pressure detected in block 902 in fig. 9. For example, processor 40 might, for instance, respond to a change in air pressure of a first magnitude and/or a first duration by altering the appearance of one or more virtual objects 21 within a first volume that is a first distance from the user 18 in virtual space 20, and might respond to a change in air pressure of a second magnitude and/or a second duration by altering the appearance of one or more virtual objects 21 within a second volume that is a second distance from the user 18 in virtual space 20, where: the second magnitude is greater than the first magnitude, the second duration is longer than the first duration, second volume is greater than the first volume, and/or the second distance is greater than the first distance (all combinations are possible).

The alteration in the appearance of the virtual object(s) 21 may be temporary. For example, the virtual object(s) 21 might be highlighted for a few seconds and then restored to its/their earlier appearance. In some examples, the virtual object(s) 21 might be displayed with its/their altered appearance until the change in air pressure which prompted the alteration in appearance is no longer detected. Restoration of the virtual object(s) 21 to its/their earlier appearance might be automatic (requiring no further user input, following the user input provided in block 902 in fig. 9), or might be in response to further user input which might or might not involve the user 18 exhaling/blowing and/or inhaling/sucking.

Any aspects of the second and third methods described above may be combined.

Embodiments of the invention provide natural and intuitive methods for a user 18 to interact with mediated reality content and leave the user's limbs, hands and feet free to perform other actions.

The computer program code 48 may arrive at the apparatus 30/33/42 via any suitable delivery mechanism. The delivery mechanism 80 may be, for example, a non-transitory computer-readable storage medium, a computer program product, a memory device, a record medium such as a compact disc read-only memory (CD-ROM) or digital versatile disc (DVD), an article of manufacture that tangibly embodies the computer program code 48. The delivery mechanism 80 may be a signal configured to reliably transfer the computer program code 48. The apparatus 30/33/42 may propagate or transmit the computer program code 48 as a computer data signal.

Although the memory 46 is illustrated in figures 5A & 5B as a single component/circuitry it may be implemented as one or more separate components/circuitry some or all of which may be integrated/removable and/or may provide permanent/semi-permanent/ dynamic/cached storage.

Although the processor 40 is illustrated in fig 5A & 5B as a single component/circuitry it may be implemented as one or more separate components/circuitry some or all of which may be integrated/removable. The processor 40 may be a single core or multicore processor.

References to computer-readable storage medium', computer program product', 'tangibly embodied computer program' etc. or a 'controller', 'computer', 'processor' etc. should be understood to encompass not only computers having different architectures such as single/multi-processor architectures and sequential (Von Neumann)/parallel architectures but also specialized circuits such as field-programmable gate arrays (FPGA), application specific circuits (ASIC), signal processing devices and other processing circuitry. References to computer program, instructions, code etc. should be understood to encompass software for a programmable processor or firmware such as, for example, the programmable content of a hardware device whether instructions for a processor, or configuration settings for a fixed-function device, gate array or programmable logic device etc.

The blocks illustrated in figures 6A, 6B and 7 to 9 may represent steps in a method and/or sections of code in the computer program code 48. The illustration of a particular order to the blocks does not necessarily imply that there is a required or preferred order for the blocks and the order and arrangement of the block may be varied. Furthermore, it may be possible for some blocks to be omitted.

Where a structural feature has been described, it may be replaced by means for performing one or more of the functions of the structural feature whether that function or those functions are explicitly or implicitly described.

Although embodiments of the present invention have been described in the preceding paragraphs with reference to various examples, it should be appreciated that modifications to the examples given can be made without departing from the scope of the invention as claimed.

Features described in the preceding description may be used in combinations other than the combinations explicitly described.

Although functions have been described with reference to certain features, those functions may be performable by other features whether described or not.

Although features have been described with reference to certain embodiments, those features may also be present in other embodiments whether described or not.

Whilst endeavoring in the foregoing specification to draw attention to those features of the invention believed to be of particular importance it should be understood that the applicant claims protection in respect of any patentable feature or combination of features hereinbefore referred to and/or shown in the drawings whether or not particular emphasis has been placed thereon.

## Claims

1. An apparatus (30; 33), comprising:
means for causing display of virtual reality content on at least one display (32) of a head-mounted viewing device (30; 33);
means for detecting, while the virtual reality content is displayed by the at least one display (32) of the head-mounted viewing device (30; 33), one or more changes in air pressure caused by a user exhaling and/or inhaling without speaking; and
means for altering display of virtual reality content by the at least one display (32) of the head-mounted viewing device based (30; 33), at least in part, on the one or more changes in air pressure, wherein altering display of virtual reality content comprises temporarily removing at least a portion of a displayed virtual visual scene (22; 26) to
reveal a portion of a real visual scene (12),
wherein the real visual scene is a representation of the real environment of the user.

2. The apparatus (30; 33) of claim 1, wherein virtual reality content comprises at least a partially artificial environment.

3. The apparatus (30; 33) of claim 1 or 2, wherein an extent to which display of virtual reality content is altered depends on a magnitude of the detected one or more changes in air pressure.

4. The apparatus (30; 33) of claim 1, wherein the user's field of view of real space (10), as provided by the at least a portion of the real visual scene (12), depends on a magnitude and/or a duration of the detected one or more changes in air pressure.

5. The apparatus (30; 33) of claim 1 or 4, wherein a size of the portion of the real visual scene (12) depends on a magnitude and/or a duration of the detected one or more changes in air pressure.

6. The apparatus (30; 33) of claim 1, 5 or 6, further comprising: means for determining an orientation of the user's head and/or a direction of the user's gaze, wherein a location at which the portion of the real visual scene (12) is revealed depends upon an orientation of the user's head and/or a direction of the user's gaze while the one or more changes in pressure are detected which are caused by the user exhaling and/or inhaling without speaking.

7. The apparatus (30; 33) of claim 5 or 6, further comprising: means for responding to user input provided by the user by replacing the at least a portion of the real visual scene (12) with at least a portion of the virtual visual scene (22; 26).

8. The apparatus (30; 33) of any of the preceding claims, wherein the apparatus (30; 33) is the head-mounted viewing device (30; 33) which comprises the at least one display (32).

9. A method, comprising:
causing display of virtual reality content on at least one display of a head-mounted viewing device (30; 33);
detecting, while the virtual reality content is displayed by the at least one display (32) of the head-mounted viewing device (30; 33), one or more changes in air pressure caused by a user exhaling and/or inhaling without speaking; and
altering display of virtual reality content by the at least one display of the head-mounted viewing device (30; 33) based, at least in part, on the one or more changes in air pressure, wherein altering display of virtual reality content comprises temporarily removing at least a portion of a displayed virtual visual scene (22; 26) to
reveal a portion of a real visual scene (12),
wherein the real visual scene is a representation of the real environment of the user.

10. Computer program instructions that, when executed by at least one processor, cause the at least one processor to perform the method of claim 9.

## Patentansprüche

1. Einrichtung (30; 33), die Folgendes umfasst:
Mittel zum Bewirken der Anzeige eines virtuellen Realitätsinhalts auf mindestens einer Anzeige (32) einer kopfmontierten Betrachtungsvorrichtung (30; 33);
Mittel zum Detektieren von einer oder mehreren Änderungen des Luftdrucks, die durch einen Benutzer, der ausatmet und/oder einatmet, ohne zu sprechen, bewirkt werden, während der virtuelle Realitätsinhalt von der mindestens einen Anzeige (32) der kopfmontierten Betrachtungsvorrichtung (30; 33) angezeigt wird; und
Mittel zum Verändern der Anzeige des virtuellen Realitätsinhalts durch die mindestens eine Anzeige (32) der kopfmontierten Betrachtungsvorrichtung (30; 33) mindestens teilweise auf Basis der einen oder der mehreren Änderungen des Luftdrucks, wobei das Verändern der Anzeige des virtuellen Realitätsinhalts das temporäre Entfernen von mindestens einem Abschnitt einer angezeigten virtuellen visuellen Szene (22; 26), um einen Abschnitt einer realen visuellen Szene (12) aufzudecken, umfasst,
wobei die reale visuelle Szene eine Repräsentation der realen Umgebung des Benutzers ist.

2. Einrichtung (30; 33) nach Anspruch 1, wobei der virtuelle Realitätsinhalt mindestens eine teilweise künstliche Umgebung umfasst.

3. Einrichtung (30; 33) nach Anspruch 1 oder 2, wobei ein Maß, in dem die Anzeige des virtuellen Realitätsinhalts verändert wird, von einer Größe der detektierten einen oder mehreren Änderungen des Luftdrucks abhängig ist.

4. Einrichtung (30; 33) nach Anspruch 1, wobei das Sichtfeld des Benutzers eines realen Raums (10), wie durch den mindestens einen Abschnitt der realen visuellen Szene (12) bereitgestellt, von einer Größe und/oder einer Dauer der detektierten einen oder mehreren Änderungen des Luftdrucks abhängig ist.

5. Einrichtung (30; 33) nach Anspruch 1 oder 4, wobei eine Abmessung des Abschnitts der realen visuellen Szene (12) von einer Größe und/oder einer Dauer der detektierten einen oder mehreren Änderungen des Luftdrucks abhängig ist.

6. Einrichtung (30; 33) nach Anspruch 1, 5 oder 6, die ferner Mittel zum Bestimmen einer Ausrichtung des Kopfes des Benutzers und/oder einer Richtung des Blicks des Benutzers umfasst, wobei ein Ort, an dem der Abschnitt der realen visuellen Szene (12) aufgedeckt wird, von einer Ausrichtung des Kopfes des Benutzers und/oder einer Richtung des Blicks des Benutzers abhängig ist, während die eine oder die mehreren Änderungen des Drucks detektiert werden, die durch das Ausatmen und/oder Einatmen des Benutzers, ohne zu sprechen, bewirkt werden.

7. Einrichtung (30; 33) nach Anspruch 5 oder 6, die ferner Folgendes umfasst: Mittel zum Reagieren auf eine Benutzereingabe, die vom Benutzer bereitgestellt wird, durch Ersetzen des mindestens einen Abschnitts der realen visuellen Szene (12) durch mindestens einen Abschnitt der virtuellen visuellen Szene (22; 26).

8. Einrichtung (30; 33) nach einem der vorhergehenden Ansprüche, wobei die Einrichtung (30; 33) die kopfmontierte Betrachtungsvorrichtung (30; 33) ist, die die mindestens eine Anzeige (32) umfasst.

9. Verfahren, das Folgendes umfasst:
Bewirken der Anzeige eines virtuellen Realitätsinhalts auf mindestens einer Anzeige einer kopfmontierten Betrachtungsvorrichtung (30; 33);
Detektieren von einer oder mehreren Änderungen des Luftdrucks, die durch einen Benutzer, der ausatmet und/oder einatmet, ohne zu sprechen, bewirkt werden, während der virtuelle Realitätsinhalt von der mindestens einen Anzeige (32) der kopfmontierten Betrachtungsvorrichtung (30; 33) angezeigt wird; und
Verändern der Anzeige des virtuellen Realitätsinhalts durch die mindestens eine Anzeige der kopfmontierten Betrachtungsvorrichtung (30; 33) mindestens teilweise auf Basis der einen oder der mehreren Änderungen des Luftdrucks, wobei das Verändern der Anzeige des virtuellen Realitätsinhalts das temporäre Entfernen von mindestens einem Abschnitt einer angezeigten virtuellen visuellen Szene (22; 26), um einen Abschnitt einer realen visuellen Szene (12) aufzudecken, umfasst,
wobei die reale visuelle Szene eine Repräsentation der realen Umgebung des Benutzers ist.

10. Computerprogrammanweisungen, die, wenn sie von mindestens einem Prozessor ausgeführt werden, bewirken, dass der mindestens eine Prozessor das Verfahren nach Anspruch 9 durchführt.

## Revendications

1. Appareil (30 ; 33), comprenant :
des moyens pour provoquer l'affichage du contenu de réalité virtuelle sur au moins un affichage (32) d'un dispositif de visualisation monté sur la tête (30 ; 33) ;
des moyens pour détecter, tandis que le contenu de réalité virtuelle est affiché par l'au moins un affichage (32) du dispositif de visualisation monté sur la tête (30 ; 33), un ou plusieurs changements de pression d'air provoqués par un utilisateur expirant et/ou inspirant sans parler ; et
des moyens pour modifier l'affichage du contenu de réalité virtuelle par l'au moins un affichage (32) du dispositif de visualisation monté sur la tête (30 ; 33), sur la base, au moins en partie, des un ou plusieurs changements de pression d'air, dans lequel la modification d'un affichage d'un contenu de réalité virtuelle comprend la suppression temporaire d'au moins une partie d'une scène visuelle virtuelle affichée (22 ; 26) pour révéler une partie d'une scène visuelle réelle (12),
dans lequel la scène visuelle réelle est une représentation de l'environnement réel de l'utilisateur.

2. Appareil (30 ; 33) de la revendication 1, dans lequel contenu de réalité virtuelle comprend au moins un environnement partiellement artificiel.

3. Appareil (30 ; 33) de la revendication 1 ou 2, dans lequel une mesure dans laquelle un affichage d'un contenu de réalité virtuelle est modifié dépend d'une amplitude des un ou plusieurs changements de pression d'air détectés.

4. Appareil (30 ; 33) de la revendication 1, dans lequel le champ de vision de l'utilisateur de l'espace réel (10), tel que fourni par l'au moins une partie de la scène visuelle réelle (12), dépend d'une amplitude et/ou d'une durée des un ou plusieurs changements de pression d'air détectés.

5. Appareil (30 ; 33) de la revendication 1 ou 4, dans lequel une taille de la partie de la scène visuelle réelle (12) dépend d'une amplitude et/ou d'une durée des un ou plusieurs changements de pression d'air détectés.

6. Appareil (30 ; 33) de la revendication 1, 5 ou 6, comprenant en outre : des moyens pour déterminer une orientation de la tête de l'utilisateur et/ou une direction du regard de l'utilisateur, dans lequel un emplacement auquel la partie de la scène visuelle réelle (12) est révélée dépend d'une orientation de la tête de l'utilisateur et/ou d'une direction du regard de l'utilisateur, tandis que les un ou plusieurs changements de pression, qui sont provoqués par l'utilisateur expirant et/ou inspirant sans parler, sont détectés.

7. Appareil (30 ; 33) de la revendication 5 ou 6, comprenant en outre : des moyens pour répondre à une entrée utilisateur fournie par l'utilisateur en remplaçant l'au moins une partie de la scène visuelle réelle (12) par au moins une partie de la scène visuelle virtuelle (22 ; 26).

8. Appareil (30 ; 33) de l'une quelconque des revendications précédentes, dans lequel l'appareil (30 ; 33) est le dispositif de visualisation monté sur la tête (30 ; 33) qui comprend l'au moins un affichage (32).

9. Procédé, comprenant les étapes consistant à :
provoquer l'affichage du contenu de réalité virtuelle sur au moins un affichage d'un dispositif de visualisation monté sur la tête (30 ; 33) ;
détecter, tandis que le contenu de réalité virtuelle est affiché par l'au moins un affichage (32) du dispositif de visualisation monté sur la tête (30 ; 33), un ou plusieurs changements de pression d'air provoqués par un utilisateur expirant et/ou inspirant sans parler ; et modifier l'affichage du contenu de réalité virtuelle par l'au moins un affichage d'un dispositif de visualisation monté sur la tête (30 ; 33), sur la base au moins en partie, des un ou plusieurs changements de pression d'air, dans lequel la modification de l'affichage du contenu de réalité virtuelle comprend la suppression temporaire d'au moins une partie d'une scène visuelle virtuelle affichée (22 ; 26) pour révéler une partie d'une scène visuelle réelle (12),
dans lequel la scène visuelle réelle est une représentation de l'environnement réel de l'utilisateur.

10. Instructions de programme d'ordinateur qui, lorsqu'elles sont exécutées par au moins un processeur, amènent l'au moins un processeur à réaliser le procédé de la revendication 9.
